# FASCICULE DE BREVET EUROPEEN

(11) **EP 1 051 693 B1**
(45) Date de publication et mention de la délivrance du brevet: **28.05.2003**
(21) Numéro de dépôt: 99900924.4
(22) Date de dépôt: 15.01.1999
(51) Int. Cl.: G07F 7/10, G06K 7/00

(54) **CARTE A MEMOIRE ASYNCHRONE**
ASYNCHRONE SPEICHERKARTE
ASYNCHRONOUS MEMORY CARD

(30) Priorité: 27.01.1998 FR 9800859
(43) Date de publication de la demande: 15.11.2000
(73) Titulaire: Gemplus, 13881 Gémenos Cedex (FR)
(72) Inventeur: COOREMAN, Pascal, F-13008 Marseille (FR); RAYON, Stéphane, F-13600 La Ciotat (FR); GOMEZ, Bertrand, F-13360 Roquevaire (FR)
(86) Numéro de dépôt international: FR9900062
(87) Numéro de publication internationale: WO99038130

(56) Documents cités:
- EP-A- 0 559 205
- WO-A-96/38804
- FR-A- 2 635 598
- FR-A- 2 684 466

## Description

L'invention concerne les cartes à mémoire, c'est-à-dire les cartes qui comportent essentiellement une mémoire et ses circuits d'adressage pour l'enregistrement et la lecture de données ou d'informations.

La mémoire de ces cartes est enregistrée et/ou lue à l'aide d'un terminal, tel qu'un lecteur de carte, qui communique avec la mémoire par des signaux électriques appliqués par l'intermédiaire de contacts. Les signaux électriques sont élaborés par le terminal suivant des protocoles normatifs particuliers qui ont pour particularité d'être de type synchrone à adressage indirect.

Avec de tels protocoles, le déroulement de la transaction est le suivant :
- une remise à zéro de la carte, notamment du compteur d'adresse de la mémoire, soit à la mise sous tension, soit par un signal de remise à zéro sur une broche prévue à cet effet ;
- un positionnement du compteur d'adresse de la mémoire à la bonne adresse par l'application d'un nombre d'impulsions déterminé sur une broche correspondant aux impulsions d'horloge ;
- une commande d'enregistrement ou de lecture dans la mémoire par une combinaison de signaux appliqués sur une broche Entrée/Sortie et sur une autre broche qui peut être la broche remise à zéro, la broche horloge ou toute autre broche.

Par exemple, le document FR2635598 décrit une carte dont la mémoire est enregistrée et/ou lue à l'aide d'un terminal, tel qu'un lecteur de carte, qui communique avec la mémoire par des signaux électriques appliqués par l'intermédiaire de contacts à un circuit d'adressage. La carte à circuit intégré comprend un élément de commande, par exemple une unité centrale de traitement (CPU), une mémoire de données, une mémoire de programme et une partie contact destinée à assurer le contact électrique avec le lecteur enregistreur de la carte.

Les inconvénients d'une telle carte à mémoire fonctionnant suivant un mode opératoire tel que décrit ci-dessus sont résumés ci-après.

La communication entre un lecteur et une carte notamment pour une transaction financière, étant sensible à des bruits électriques (baisse de tension, contacts électriques défaillants, parasites, ...), il n'est pas garanti l'exactitude des messages échangés.

Cela implique notamment de répéter la communication une ou plusieurs fois pour s'assurer que la transaction est correctement réalisée.
- La répétition des messages augmente le temps nécessaire à une transaction.
- En outre, il est possible d'avoir des transactions erronées suite à ces bruits électriques.
- L'adressage de la mémoire est effectué par l'intermédiaire d'un compteur d'impulsions qui compte la série des impulsions qui lui sont appliquées et le code affiché par le compteur à la fin de cette série constitue le code d'adresse de la mémoire. Cet adressage, dit indirect, implique une certaine durée due au comptage des impulsions et constitue une source d'erreur, par exemple si une impulsion n'est pas prise en compte pour diverses raisons.
- Aucun contrôle de l'intégrité de la donnée ou de la commande reçue n'est effectué, d'où une absence de sécurité.
- Le protocole de transaction est du type synchrone, ce qui implique un synchronisme rigoureux entre le terminal et la carte à mémoire, synchronisme qu'il est parfois difficile d'obtenir et de maintenir au cours de la transaction par suite de perturbations extérieures.
- Aucun accusé de réception n'est effectué lors de réception de la donnée ou de la commande reçue.
- Aucune vérification de la bonne exécution de la commande n'est effectuée.

Un but de la présente invention est donc de réaliser une carte à mémoire qui ne présente pas les inconvénients précités.

Ce but est atteint en modifiant les signaux appliqués à la carte à mémoire et les circuits d'accès à la mémoire de la carte de manière que :
- la communication entre le terminal et la carte à mémoire soit effectuée selon un protocole de communication asynchrone ;
- l'adressage de la mémoire soit effectué par adressage direct ;
- l'information qui est reçue par la carte et relative à une adresse, une commande ou une donnée soit vérifiée ;
- la carte à mémoire effectue un accusé de réception au terminal de l'information reçue et de son intégrité ;
- la carte à mémoire transmette au terminal une information de bonne exécution de la commande.

L'invention concerne une carte à mémoire à contacts comprenant une mémoire apte à coopérer avec un terminal par l'intermédiaire de circuits d'accès comprenant un circuit d'adressage et un circuit de contrôle, caractérisée en ce que les circuits d'accès à ladite mémoire comprennent en outre :
- un circuit de réception et d'analyse des signaux électriques appliqués aux contacts de la carte à mémoire par le terminal, ledit circuit de réception et d'analyse fournissant des messages et des codes ;
- un circuit d'interprétation et d'aiguillage des codes fournis par le circuit d'analyse selon qu'il s'agit d'un code d'adresse de la mémoire, d'un code de donnée ou d'un code de commande ;
- un registre d'adresse qui enregistre le code d'adresse fourni par le circuit d'interprétation et d'aiguillage pour le mettre à disposition du circuit d'adressage ;
- au moins un registre de données qui enregistre le code de commande de l'opération à réaliser sur la mémoire ou le code de la donnée à y enregistrer éventuellement pour mettre lesdits codes à la disposition du circuit de contrôle en vue d'en effectuer l'opération indiquée par le code de commande,
- au moins un registre de sortie qui enregistre le code lu dans la mémoire ou le code d'état d'exécution de la commande, fourni par le circuit de contrôle, et
- un circuit de transmission aux contacts des codes fournis par le registre de sortie et des messages fournis par le circuit de réception et d'analyse pour les transmettre au terminal.

La carte selon l'invention a l'avantage moyennant quelques aménagements supplémentaires mineurs, en plus des fonctions câblées ci-dessus, d'être totalement compatible avec des lecteurs du parc existant. En particulier, il est particulièrement avantageux de pouvoir utiliser les lecteurs de carte à microprocesseur, ce qui est impossible actuellement avec les cartes à mémoire actuelles.

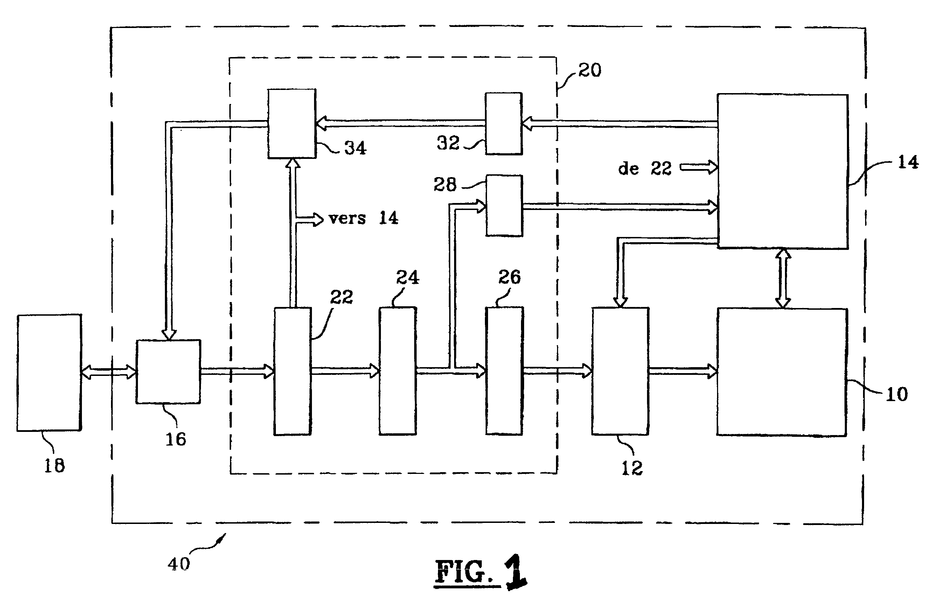

L'invention sera mieux comprise à la lecture de la description suivante d'un exemple particulier de réalisation, ladite description étant faite en relation avec le dessin joint dans lequel la figure unique est un schéma fonctionnel d'une carte à mémoire selon l'invention.

Une carte à mémoire 40 comprend de manière connue :
- une mémoire 10 du type permettant la lecture et l'enregistrement de données sous forme de chiffres binaires dans des cellules élémentaires,
- un circuit d'adressage 12 de la mémoire 10 pour sélectionner un ou des groupes de cellules élémentaires correspondant chacun à une donnée à lire ou à enregistrer,
- un circuit de contrôle 14 de la mémoire 10 et du circuit d'adressage 12 pour enregistrer ou lire les cellules de la mémoire 10 à une adresse indiquée au circuit d'adressage 12, et
- une pluralité de contacts 16 disposés sur l'un des côtés de la carte pour réaliser les liaisons électriques entre un terminal 18 et la carte à mémoire.

Selon l'invention, la carte à mémoire comprend, outre les éléments indiqués ci-dessus, un dispositif 20 qui réalise la liaison entre, d'une part la pluralité de contacts 16 et, d'autre part, le circuit d'adressage 12 et le circuit de contrôle 14.

Ce dispositif 20 comprend :
- un circuit de réception et d'analyse 22 des signaux électriques reçus sur les contacts 16 pour analyser les signaux électriques et fournir d'une part des messages au terminal 18 et, d'autre part, des codes représentatifs de données, d'adresses de cellules de la mémoire et de commandes ou instructions à effectuer,
- un circuit d'interprétation et d'aiguillage 24 des codes fournis par le circuit de réception et d'analyse 22,
- un registre d'adresse 26 pour enregistrer le code d'adresse transmis par le terminal et le mettre à la disposition du circuit d'adressage 12,
- au moins un registre de données 28 pour enregistrer le code de donnée ou le code d'instruction transmis par le terminal et le mettre à la disposition du circuit de contrôle 14,
- au moins un registre de sortie 32 pour enregistrer le code lu dans la mémoire 10 ou l'état d'exécution de l'instruction, et
- un circuit de transmission 34 du code contenu dans le registre de sortie 32 vers le terminal 18 par l'intermédiaire des contacts 16.

La liaison entre le terminal 18 et la carte 40 s'effectue par la pluralité de contacts 16 en appliquant sur ces contacts des signaux électriques qui sont normés selon des protocoles de communication dit asynchrone. Ces protocoles peuvent être de différents types connus et notamment ceux connus sous l'appellation RS232 en ce qui concerne une liaison série couramment utilisé entre un ordinateur dit personnel et ses périphériques ou les appellations V22, V23, etc ... en ce qui concerne la liaison par modem.

Le protocole choisi est mis en oeuvre par le terminal et doit être compris par la carte à mémoire au niveau du circuit de réception et d'analyse 22.

Ce dernier circuit 22 réalise la réception des signaux électriques reçus du terminal et en effectue l'analyse pour en contrôler l'intégrité.

A cet effet, le terminal est prévu pour ajouter une information redondante dans les signaux transmis, information que le circuit de réception et d'analyse 22 est capable d'en vérifier la présence et la valeur. Il peut s'agir de la présence d'un bit de parité ou d'un code cyclique redondant. Il est à remarquer que de nombreux protocoles de communication prévoient une telle redondance pour vérifier l'intégrité de l'information transmise.

Au cas où cette vérification n'aboutit pas, l'instruction n'est pas exécutée.

Outre l'absence d'exécution de la commande, le circuit de réception et d'analyse 22 est prévu pour fournir au terminal un accusé de réception tel qu'un code indiquant que la carte a bien reçu l'information et que son intégrité est correcte. Dans le cas contraire, il fournit un code d'erreur. De tels accusés de réception sont prévus dans certains protocoles de communication.

Selon l'invention, l'adressage de la mémoire 10 s'effectue directement par un code d'adresse qui est reçu et analysé par le circuit de réception et d'analyse 22.

Un tel adressage direct peut être réalisé en mettant en oeuvre un protocole connu sous l'abréviation I2C, protocole utilisé pour le pilotage de périphériques d'ordinateurs.

Ce code d'adresse est détecté par le circuit d'interprétation et d'aiguillage 24 qui le transmet au registre d'adresse 26.

Le circuit d'interprétation et d'aiguillage 24 détecte également les codes de donnée et d'instruction et les transmet à un ou des registres 28, les codes contenus dans le registre 28 étant mis à la disposition du circuit de contrôle 14.

Lorsque l'instruction a été effectuée, le circuit de contrôle 14 est prévu pour générer un code d'état indiquant l'exécution de l'instruction ou d'un code d'erreur indiquant que l'instruction n'a pas été exécutée. Ce code est transmis au terminal 18 par l'intermédiaire du registre de sortie 32 recevant le code du circuit de contrôle 14 et du circuit de transmission 34.

Lorsque l'instruction consiste en une lecture, le code lu dans la mémoire est transmis au terminal par l'intermédiaire du registre de sortie 32 et du circuit d'émission 34.

Bien entendu, le registre de sortie 32 peut être sous la forme de deux registres, l'un pour les codes d'état et l'autre pour les données lues dans la mémoire 10.

Dans la carte à mémoire qui vient d'être décrite, le déroulement d'une transaction avec un terminal est le suivant :
- le terminal génère une instruction selon un programme d'application adapté à la carte à mémoire selon l'invention, cette instruction comportant au moins un code d'instruction, un code d'adresse et un code de donnée, l'ensemble constituant un message,
- le terminal élabore une information de redondance telle qu'un chiffre de parité ou un code cyclique redondant et l'introduit dans le message constitué des codes à transmettre,
- le terminal transmet ces codes à la carte à mémoire en mode asynchrone par l'intermédiaire des contacts 16,
- le circuit de réception et d'analyse 22 valide le message reçu par la carte à mémoire,
- le circuit de réception et d'analyse 22 transmet un accusé de réception du message au terminal par l'intermédiaire du circuit de transmission en indiquant par un code la bonne ou la mauvaise réception du message,
- le circuit de contrôle 14 exécute l'instruction, et
- le circuit de contrôle 14 transmet au terminal un message attestant l'exécution ou non de l'instruction par l'intermédiaire du registre de sortie 32 et: du circuit de transmission 34.

## Revendications

1. Carte à mémoire (40) à contacts (16) comprenant une mémoire (10) apte à coopérer avec un terminal (18) par l'intermédiaire de circuits d'accès comprenant un circuit d'adressage (12) et un circuit de contrôle (14), **caractérisée en ce que** les circuits d'accès à la mémoire (10) comprennent en outre :
- un circuit de réception et d'analyse (22) des signaux électriques appliqués aux contacts (16) de la carte à mémoire (40) par le terminal (18), ledit circuit de réception et d'analyse fournissant des messages et des codes ;
- un circuit d'interprétation et d'aiguillage (24) des codes fournis par le circuit de réception et d'analyse (22) selon qu'il s'agit d'un code d'adresse de la mémoire, d'un code de donnée ou d'un code de commande ou d'instruction ;
- un registre d'adresse (26) qui enregistre le code d'adresse fourni par le circuit d'interprétation et d'aiguillage pour le mettre à disposition du circuit d'adressage (12) ;
- au moins un registre de données qui enregistre le code de commande de l'opération à réaliser sur la mémoire ou le code de la donnée à y enregistrer éventuellement pour mettre lesdits codes à la disposition du circuit de contrôle (14) en vue d'en effectuer l'opération indiquée par le code de commande ;
- au moins un registre de sortie (32) qui enregistre le code lu dans la mémoire (10) ou le code d'état d'exécution de la commande, fourni par le circuit de contrôle (14), et
- un circuit de transmission (34) aux contacts des codes fournis par le registre de sortie (32) et des messages fournis par le circuit de réception et d'analyse pour les transmettre au terminal (18).

2. Carte à mémoire selon la revendication 1, **caractérisée en ce** le circuit de réception et d'analyse (22) est apte à échanger des données selon un protocole de communication asynchrone.

3. Carte à mémoire selon la revendication 1, **caractérisée en ce que** le circuit de réception et d'analyse (22) est apte à échanger des données avec contrôle d'intégrité du message correspondant aux signaux électriques transmis.

4. Carte à mémoire selon la revendication 1, **caractérisée en ce que** le circuit de réception et d'analyse (22) est apte à détecter et comprendre des signaux électriques transmis par le terminal (18) selon un protocole de communication asynchrone avec contrôle d'intégrité du message correspondant aux signaux électriques transmis.

5. Carte à mémoire selon l'une des revendications précédentes, **caractérisée en ce que** le circuit: de transmission (34) est apte à transmettre les messages fournis par le circuit de réception et d'analyse (22) et les codes fournis par le registre de sortie (32) sous une forme détectable et compréhensible par le terminal (18) selon le protocole de communication asynchrone.

6. Carte à mémoire selon l'une des revendications précédentes, **caractérisée en ce que** le circuit de réception et d'analyse (22) est apte à générer un signal indiquant la réception correcte et complète des signaux transmis par le terminal, ledit signal étant appliqué à un circuit de transmission (34).

7. Carte à mémoire selon l'une des revendications précédentes, **caractérisée en ce que** le circuit de contrôle est apte à générer un code d'état indiquant l'exécution ou non de l'instruction.

## Patentansprüche

1. Speicherkarte (40) mit Kontakten (16), mit einem Speicher (10), der über Zugriffschaltungen, bestehend aus einer Adressierschaltung (12) und einer Prüfschaltung (14), mit einem Terminal (18) zusammenwirken kann, **dadurch gekennzeichnet, dass** die Zugriffschaltungen Speicher (10) ferner umfassen:
- eine Empfangs- und Analyseschaltung (22) der elektrischen Signale, die vom Terminal (18) an die Kontakte (16) der Speicherkarte angelegt werden, wobei die besagte Empfangs- und Analyseschaltung Meldungen und Codes liefert;
- eine Interpretierungs- und Zuweisungsschaltung (24) der von der Empfangs- und Analyseschaltung (22) gelieferten Codes, je nachdem ob es sich um einen Adressencode des Speichers, einen Datencode oder einen Steuer- oder Anweisungscode handelt;
- ein Adressenregister (26), das den von der Interpretierungs- und Zuweisungsschaltung gelieferten Adressencode aufzeichnet, um ihn der Adressierschaltung (12) zur Verfügung zu stellen;
- mindestens ein Datenregister, das den Befehlscode der am Speicher vorzunehmenden Operation oder den dort eventuell aufzuzeichnenden Datencode aufzeichnet, um die besagten Codes der Prüfschaltung (14) zur Verfügung zu stellen, um damit die vom Befehlscode angegebene Operation durchzuführen,
- mindestens ein Ausgangsregister (32), das den im Speicher (10) gelesenen Code oder den von der Prüfschaltung (14) gelieferten Code des Ausführungszustands des Befehls aufzeichnet, und
- eine Übertragungsschaltung (34) an die Kontakte der vom Ausgangsregister (32) gelieferten Codes und der von der Empfangs- und Analyseschaltung gelieferten Meldungen, um sie an das Terminal (18) zu übertragen.

2. Speicherkarte nach Anspruch 1, **dadurch gekennzeichnet, dass** die Empfangs- und Analyseschaltung (22) Daten gemäß einem asynchronen Kommunikationsprotokoll austauschen kann.

3. Speicherkarte nach Anspruch 1, **dadurch gekennzeichnet, dass** die Empfangs- und Analyseschaltung (22) Daten mit Unversehrtheitsprüfung der den übertragenen elektrischen Signalen entsprechenden Meldung austauschen kann.

4. Speicherkarte nach Anspruch 1, **dadurch gekennzeichnet, dass** die Empfangs- und Analyseschaltung (22) vom Terminal (18) gemäß einem asynchronen Kommunikationsprotokoll übertragene elektrische Signale erfassen und verstehen kann, mit Unversehrtheitsprüfung der den übertragenen Signalen entsprechenden Meldung.

5. Speicherkarte nach einem der vorangehenden Ansprüche, **dadurch gekennzeichnet, dass** die Übertragungsschaltung (34) die von der Empfangs- und Analyseschaltung (22) gelieferten Meldungen und die vom Ausgangsregister (32) in einer vom Terminal (18) erfassbaren und verständlichen Form gemäß dem asynchronen Kommunikationsprotokoll 1 gelieferten Codes übertragen kann.

6. Speicherkarte nach einem der vorangehenden Ansprüche, **dadurch gekennzeichnet, dass** die Empfangsund Analyseschaltung (22) ein Signal erzeugen kann, das den korrekten und kompletten Empfang der vom Terminal übertragenen Signale anzeigt, wobei das besagte Signal an eine Übertragungsschaltung (34) angelegt wird.

7. Speicherkarte nach einem der vorangehenden Ansprüche, **dadurch gekennzeichnet, dass** die Prüfschaltung einen Zustandscode erzeugen kann, der die Ausführung oder nicht der Anweisung anzeigt.

## Claims

1. A memory card (40) with contacts (16) comprising a memory (10) capable of cooperating with a terminal (18) by means of access circuits comprising an addressing circuit (12) and a control circuit (14), **characterised in that** the circuits for accessing the memory (10) also comprise:
- a circuit (22) for receiving and analysing the electrical signals applied to the contacts (16) of the memory card (40) by the terminal (18), said receiving and analysis circuit supplying messages and codes;
- a circuit (24) for interpreting and switching the codes supplied by the receiving and analysis circuit (22) according to whether it is a memory address code, a data code or a command or instruction code;
- an address register (26) which records the address code supplied by the interpreting and switching circuit in order to make it available to the addressing circuit (12);
- at least one data register which records the command code for the operation to be carried out on the memory or the code for the data item to be recorded therein if applicable in order to make said codes available to the control circuit (14) with a view to performing thereon the operation indicated by the command code;
- at least one output register (32) which records the code read from the memory (10) or the command execution status code, supplied by the control circuit (14); and
- a circuit for transmission (34) to the contacts of codes supplied by the output register (32) and messages supplied by the receiving and analysis circuit in order to transmit them to the terminal (18).

2. A memory card according to Claim 1, **characterised in that** the receiving and analysis circuit (22) is capable of exchanging data according to an asynchronous communication protocol.

3. A memory card according to Claim 1, **characterised in that** the receiving and analysis circuit (22) is capable of exchanging data with integrity checking of the message corresponding to the electrical signals transmitted.

4. A memory card according to Claim 1, **characterised in that** the receiving and analysis circuit (22) is capable of detecting and understanding electrical signals transmitted by the terminal (18) according to an asynchronous communication protocol with integrity checking of the message corresponding to the electrical signals transmitted.

5. A memory card according to one of the preceding claims, **characterised in that** the transmission circuit (34) is capable of transmitting the messages supplied by the receiving and analysis circuit (22) and the codes supplied by the output register (32) in a form detectable and understandable by the terminal (18) according to the asynchronous communication protocol.

6. A memory card according to one of the preceding claims, **characterised in that** the receiving and analysis circuit (22) is capable of generating a signal indicating the correct and complete reception of the signals transmitted by the terminal, said signal being applied to a transmission circuit (34).

7. A memory card according to one of the preceding claims, **characterised in that** the control circuit is capable of generating a status code indicating whether or not the instruction has been executed.
